# EUROPEAN PATENT APPLICATION

(11) **EP 3 819 697 A1**
(43) Date of publication of application: **12.05.2021**
(21) Application number: 20205099.3
(22) Date of filing: 02.11.2020
(51) Int. Cl.: G02B 27/00, G03B 17/08

(54) **OPTICAL MODULE AND SEALING METHOD THERON**

(30) Priority: 06.11.2019 JP 2019201400
(71) Applicant: Hitachi-LG Data Storage, Inc., Tokyo 108-0022 (JP)
(72) Inventor: ISHIDA, Susumu, Tokyo, 100-8280 (JP); FUJIMORI, Shinya, Tokyo, 108-0022 (JP); YAMASHITA, Masashi, Tokyo, 108-0022 (JP)
(74) Representative: Strehl Schübel-Hopf & Partner

(57) **Abstract**

An optical module in which an optical component is accommodated in a space formed by a housing and a cap has a structure where a seal unit in which an O-ring and a sealant are interposed between the housing and the cap is provided, and in the seal unit, the sealant is disposed on an outside of the O-ring, an outer surface of the O-ring, the outer surface not being in contact with the housing and the cap, is covered with the sealant without a gap, and a space surrounded by the O-ring, the housing, and the cap is filled with the sealant.

## Description

### BACKGROUND OF THE INVENTION

### 1. Field of the Invention

The present invention relates to a sealing structure of an optical module of an image output device.

### 2. Description of the Related Art

As an optical module of an image output device, there is known an optical module with a package structure including optical components including a light source, a pedestal on which the optical components are mounted, a cover which is combined with the pedestal to seal the optical components, and an exit window which is provided in the cover to allow light from the light source to exit to the outside. Then, the pedestal and the cover have a sealing structure where a seal member is used to shut off air inside and outside the optical module.

Here, since the material of an O-ring generally used as the seal member has high water permeability, when the O-ring is exposed to a high-temperature and high-humidity condition for a long time, water vapor infiltrates into the material of the O-ring, and water vapor permeates through the O-ring over time. The water vapor that permeates through the O-ring infiltrates into the housing, thereby resulting in a gradual rise in humidity inside the housing. In addition, it is known that a sealant generally used as the seal member generates outgas from itself both in a liquid state during application and in a rubber state after curing. Since a part of the outgas is trapped in the sealed housing, the outgas adheres to the optical components inside the housing to cause an operational defect.

Therefore, JP 2016-35491 A discloses a structure that prevents the defect of the sealing structure using the O-ring or the sealant described above. JP 2016-35491 A discloses a structure of an optical module in which a pedestal and a cover are sealed with an O-ring and a sealant in a liquid state such that a compression direction of the O-ring and a compression direction of the sealant in a liquid state are substantially perpendicular to each other.

### SUMMARY OF THE INVENTION

However, in the structure described in JP 2016-35491 A, the presence of air between the O-ring and the sealant disposed on the outside of the O-ring is not recognized. Namely, in order to make the sealability of the O-ring effective, in an assembly step, the O-ring is required to be squeezed by approximately 10% to 30% in a thickness direction. At that time, air present in a gap surrounded by the sealant and the O-ring is compressed, so that the pressure of the air is increased. At that time, a part of the sealant is pushed out outward, and an air penetration hole (through-hole) is formed in a tunnel shape between the inside and the outside of the housing, so that air leakage may occur. Accordingly, the sealing of the sealant breaks down, which is a problem. In addition, when the entirety of the optical module becomes hot, there is a risk that the volume of air in the gap between the O-ring and the sealant expands so that a through-hole is formed in the sealant. When the through-hole is present in the sealant, outside water vapor infiltrates into the sealant in a liquid state through the through-hole, and as a result, water vapor infiltrates into the housing, which is a problem.

Therefore, an object of the present invention provides an optical module with a high moisture resistant package structure which solves the above problems to prevent condensation from occurring inside the optical module and to allow optical components operate normally.

According to one example of the present invention, there is provided an optical module in which an optical component is accommodated in a space formed by a housing and a cap and which has a structure where a seal unit in which an O-ring and a sealant are interposed between the housing and the cap is provided, and in the seal unit, the sealant is disposed on an outside of the O-ring, an outer surface of the O-ring, the outer surface not being in contact with the housing and the cap, is covered with the sealant without a gap, and a space surrounded by the O-ring, the housing, and the cap is filled with the sealant.

The present invention provides an optical module with a high moisture resistant package structure.

### BRIEF DESCRIPTION OF THE DRAWINGS

Fig. 1 is a side cross-sectional view illustrating a configuration view of an optical module in a first embodiment;
Fig. 2 is an enlarged cross-sectional view of a seal unit of the optical module in the first embodiment;
Fig. 3 is an enlarged cross-sectional view of a seal unit of an optical module in a second embodiment;
Fig. 4 is an enlarged cross-sectional view of a seal unit of an optical module in a third embodiment;
Fig. 5 is a side cross-sectional view illustrating a configuration view of an optical module in a fourth embodiment;
Fig. 6 is a perspective view of a schematic configuration of an optical engine of the related art;
Fig. 7 is a top schematic view illustrating a configuration view of an optical module of the related art; and
Fig. 8 is a side cross-sectional view illustrating a configuration view of the optical module of the related art.

### DETAILED DESCRIPTION OF THE PREFERRED EMBODIMENTS

Hereinafter, embodiments of the present invention will be described with reference to the drawings.

### [First embodiment]

First, an optical module of the related art used in an image output device, which is the base for the present embodiment, will be described. The optical module is a member in which an optical engine where optical components are disposed to realize a designed optical path in an image output device is installed inside a housing.

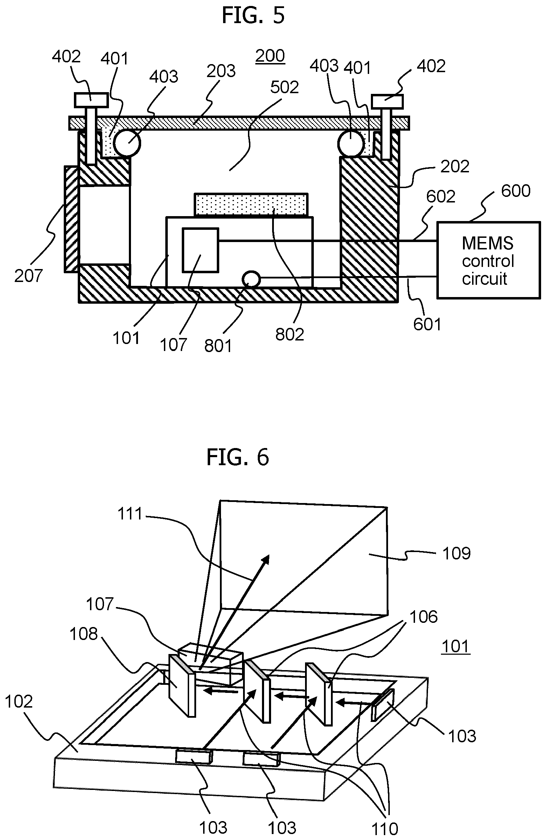

Fig. 6 is a perspective view of a schematic configuration of an optical engine of the related art. In Fig. 6, an optical engine 101 employs a method by which each optical component is fixed to a pedestal 102 with an adhesive agent. Examples of main optical components of the optical engine 101 include laser diodes (LD's) 103 that emit blue, green, and red light, a plurality of RGB combining mirrors 106, a micro electro mechanical systems (MEMS) 107, and an optical mirror 108. Incidentally, in Fig. 6, reference sign 109 denotes a projection screen, reference sign 110 denotes an optical path, and reference sign 111 denotes an image.

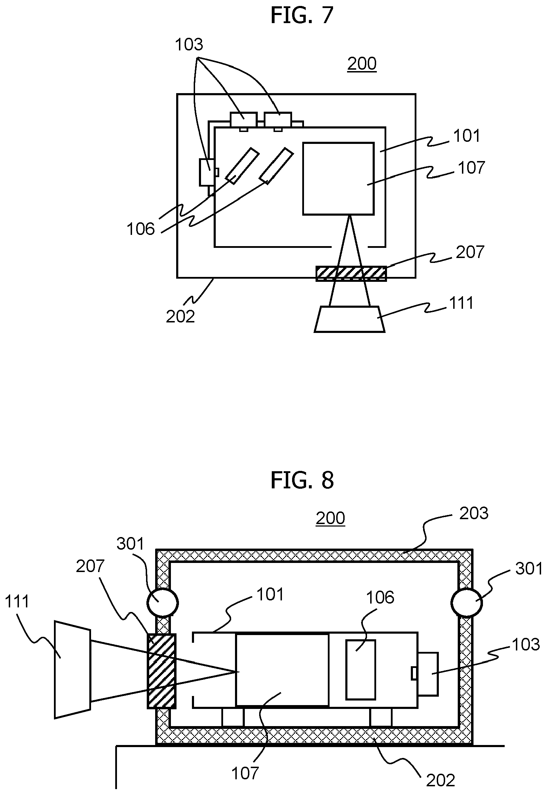

Fig. 7 is a top schematic view illustrating a configuration view of an optical module in which the optical engine 101 of Fig. 6 is installed inside a housing 202, and Fig. 8 is a side cross-sectional view thereof. In Figs. 7 and 8, an optical module 200 has a package structure where the optical engine 101 of Fig. 6 is installed inside the housing 202, an exit window 207 required to project an image 111, which is generated by the optical engine, onto the screen is provided on a side surface of the housing, and a cap 203 is installed in an upper portion of the housing 202. The housing 202 and the cap 203 have a sealing structure where a seal member 301 formed of a sealant or an O-ring is used to shut off air inside and outside the optical module.

Here, the LD 103 or the MEMS 107 mounted on the optical engine 101 generates heat during electrical driving. Since the housing 202 of the optical module, which is made of metal such as aluminum die-cast, has good heat conduction, the generated heat quickly diffuses to the entirety of the housing 202. Accordingly, the temperature of a component such as the optical mirror 108 or a lens is also likely to rise.

For example, when the optical module is used in a head up display (HUD) used as an image output device in an automobile, the entirety of the optical module becomes very hot due to heat generated by the lighting of the LD 103 or the operation of the MEMS 107 during operation of the optical module for a long time. Here, when the sealing structure of the optical module is not sufficient, air that is taken into the optical module and contains water vapor becomes very hot, the air stays inside the optical module in a state where a large amount of moisture is taken in. Thereafter, when the temperature inside the automobile reaches a sufficiently low temperature, for example, a negative temperature, the air containing water vapor and staying inside the optical module is cooled, and according to circumstances, condensation occurs. When the imaging device operates in this state, condensation occurs in the optical components, particularly, the exit window 207 or the MEMS 107. The condensation causes malfunction of the MEMS 107 or dimming of the exit window 207, so that a defect such as blurring of the image 111 occurs. Furthermore, when the MEMS 107 is driven in the air containing water vapor inside the optical module 200, the movable angle or speed of the MEMS 107 is changed according to humidity, and thus a defect such as a change in image projection region or image quality of the image 111 occurs.

For this reason, the present embodiment provides a high moisture resistant package structure that prevents condensation from occurring inside the optical module and allows the optical component such as the MEMS to normally operate.

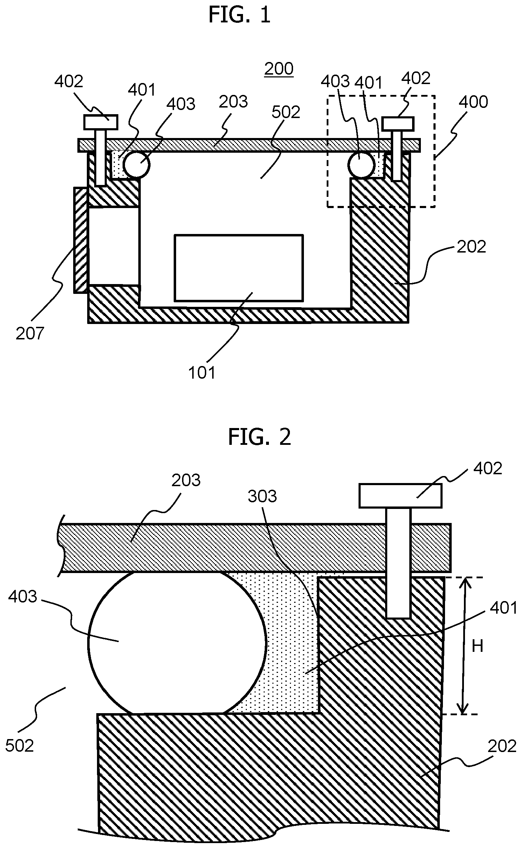

Fig. 1 is a side schematic view illustrating a configuration view of an optical module in the present embodiment. In Fig. 1, the same configurations as in Fig. 8 are denoted by the same reference signs, and descriptions thereof will be omitted. In Fig. 1, the optical engine 101 is fixed inside the housing 202 with screws or an adhesive agent (not illustrated). The optical module 200 has a package structure where the housing 202 is covered with the cap 203 so that a housing inside 502 forms a sealed space. Then, a seal unit 400 has a sealing structure where a screw 402, an O-ring 403, and a sealant 401 shut off air inside and outside the optical module 200.

Fig. 2 is an enlarged cross-sectional view of the seal unit 400 of the optical module in the present embodiment. In Fig. 2, a step unit 303 disposed to adjust the squeeze margin of the O-ring 403 is installed at a peripheral edge of the housing 202. It is desirable that a height H of the step unit 303 is 70% to 90% of the diameter of the O-ring 403. The cap 203 is installed on an upper surface of the step unit 303.

The O-ring 403 is interposed between the cap 203 and a bottom surface of the step unit 303 of the housing to have a shape where the squeeze height of the O-ring 403 is fixed at the height of the step unit 303. Since the housing 202 and the cap 203 are fixed on the outside of the O-ring 403 with, for example, a plurality of the screws 402, the housing 202 and the cap 203 can hold the squeeze margin of the O-ring 403 at a constant height over the entire periphery.

A portion surrounded by the surface of an outer peripheral portion of the O-ring 403, a bottom surface of the cap, and the step unit 303 of the housing is filled with the sealant 401 without a gap. As a result, the sealant 401 is in close contact with the surface of the housing 202 and the surface of the cap 203, and thus the sealant itself also has a sealing function. Therefore, since the sealing function of the O-ring 403 itself and the sealing function of the sealant 401 itself work independently, the sealing structure of Fig. 2 becomes a twofold sealing structure.

Since the sealant 401 used in the sealing structure of Fig. 2 is, for example, a thermosetting olefin sealant, the sealant is in a liquid state during injection of the sealant, and thus a gap between the O-ring 403 and the cap 203 or a gap between the O-ring 403 and the housing 202 can be completely covered with the sealant 401.

In the sealing structure of Fig. 2, in an assembly step of the optical module, sealing properties of the O-ring are secured in a step of tightening the screws to squeeze the O-ring in a vertical direction after a step of injecting the sealant 401 to apply the sealant. Incidentally, even after the sealant 401 is solidified, the elastic modulus of the sealant 401 is required to be smaller than the elastic modulus of the O-ring 403. Accordingly, even if the O-ring is deformed, the deformation of the sealant 401 after solidification follows the deformation thereof, and thus the adhesion between the O-ring and the sealant is not impaired.

Here, even if the O-ring 403 is deformed by the tightening of the screws, no compressed air is present between the O-ring 403 and the sealant 401, and thus a through-hole is not formed in the sealant 401. Furthermore, in order to solidify the thermosetting sealant, the temperature of the optical module 200 is required to be raised up to a temperature where the sealant which is liquid is cured, namely, approximately 70 to 100°C. At this time, since the optical module is sealed, the internal pressure of the housing (pressure on the inside of the O-ring) is increased as the air expands thermally. In the sealing structure of Fig. 2, since the air sealed inside the housing of the module expands, the internal air pressure of the housing is increased. The increased internal pressure becomes pressure that pushes the O-ring outward, but the internal pressure is not transmitted to the outside of the O-ring due to the sealing effect of the compressed O-ring. For this reason, the pressure which causes formation of a through-hole is not applied to the sealant disposed on the outside of the O-ring. Furthermore, when a heat generation component such as the LD or the MEMS accommodated in the optical module generates heat, a rise in temperature of the air inside the optical module occurs. Accordingly, an increase in internal air pressure of the optical module occurs, but in the structure of Fig. 2, due to the blocking effect by the O-ring, the sealant is not affected by the increase in internal pressure of the optical module, and the sealant does not receive lateral internal pressure. Accordingly, the sealability of the optical module can be held.

When the optical module is used under a high-temperature and high-humidity environment, a large amount of water vapor is present outside the optical module. In the structure of Fig. 2, the sealant having a low water vapor permeability prevents water vapor from permeating the material, and a slight amount of water vapor that permeates through the sealant is further prevented from permeating the material also by the O-ring, namely, the permeation can be prevented in a twofold manner. Accordingly, the dimming of the optical components caused by water vapor does not occur, for example, even for a requirement of ten or more years for an in-vehicle HUD. In addition, high reliability of the optical image can be realized without affecting operation of the MEMS.

As described above, the present embodiment can provide the optical module with a high moisture resistant package structure where condensation is prevented from occurring inside the optical module and the optical components operate normally.

In addition, regarding the outgas generated from the sealant 401, in the structure of Fig. 2, since the O-ring 403 is located closer to the inside than the sealant 401, the outgas generated from the sealant is shut off by the O-ring, so that the outgas can be prevented from infiltrating into the housing.

### [Second embodiment]

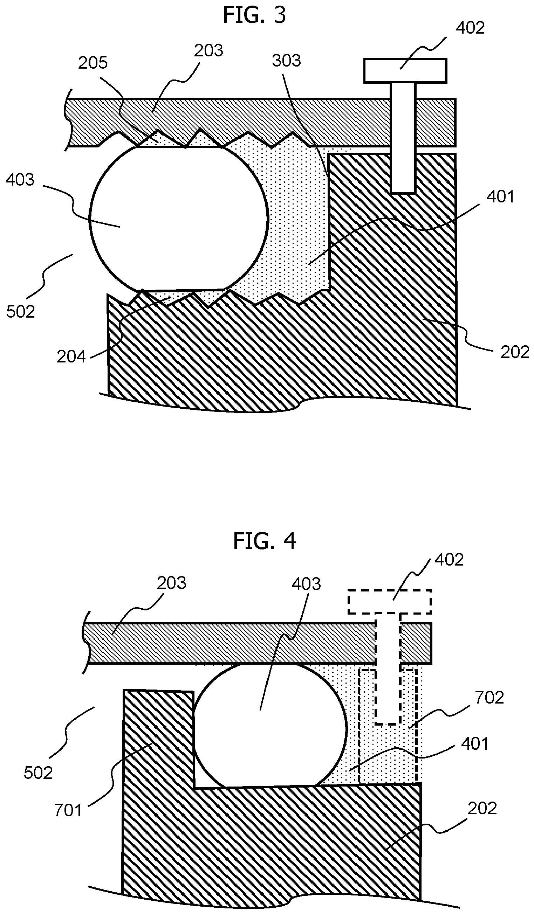

Fig. 3 is an enlarged cross-sectional view of a seal unit in which a sealant and an O-ring of an optical module are used in the present embodiment. In Fig. 3, the same configurations as in Fig. 2 are denoted by the same reference signs, and descriptions thereof will be omitted. Fig. 3 illustrates a structure where the sealant is interposed between a gap 204 between the O-ring 403 and an inner surface of the housing 202 and a gap 205 between the O-ring 403 and the surface of the cap 203.

In production of a component such as the housing 202 or the cap 203, for example, machining, injection molding, forging, or the like is employed. Since a low-cost product has low processing accuracy, surface roughness is generated on the surface that comes into contact with the O-ring. When the surface roughness is approximately 10 µm or more, even if the O-ring is deformed by the tightening of the screws or the like, the surface of the housing or the cap and the surface of the O-ring are not sufficiently in close contact with each other, and thus a very small through-hole (interface through-hole) is formed at the interface between the surfaces of the O-ring and the housing to cause interface leakage (air leakage at the interface between the O-ring and the housing). In order to prevent the interface leakage, the surfaces of the housing and the cap, which face the O-ring, are required to be additionally processed to eliminate roughness or scratches. Furthermore, even if a scratch having a depth of 10 µm or more or "dust" is present on the surface of the housing or the cap, which faces the O-ring, an interface through-hole is generated in the portion of scratches or "dust" to cause interface leakage.

Therefore, in the structure of Fig. 3 according to the present embodiment, a rough portion, a scratch portion, or "dust" on the surface of the housing or the cap can be filled with the sealant in a liquid state, so that close contact between the O-ring and the sealant can be secured. Accordingly, an interface through-hole causing interface leakage is not formed. For this reason, a component of which the surface does not have high processing accuracy can be used as the housing or the cap.

Furthermore, the structure is such that the sealant with which the rough portion of the surface of the housing 202 is filled is interposed between the housing and the O-ring. The repulsive force of the O-ring contracted by the tightening force of the screws applies pressure in the vertical direction. For this reason, even if the internal pressure of the housing is increased, the internal pressure is not applied to the sealant with which the gap between the O-ring 403 and the roughness of the surface of the housing 202 is filled, and thus an interface through-hole is not generated in the sealant with which the roughness is filled. Accordingly, even if a component of which the surface in contact with the O-ring has low surface roughness accuracy is used as the housing 202 or the cap 203, sealing performance can be secured.

### [Third embodiment]

Fig. 4 is an enlarged cross-sectional view of a seal unit of an optical module in the present embodiment. In Fig. 4, the same configurations as in Fig. 2 are denoted by the same reference signs, and descriptions thereof will be omitted. In Fig. 4, an O-ring stopper 701 is installed in an inner wall of the housing 202. Columns 702 for screwing are provided at equal intervals on an outer wall of the housing. It is desirable that the height of the column is set according to the size of the squeeze margin of the O-ring as described in the first embodiment.

An outer periphery of the O-ring stopper 701 is disposed in contact with an inner periphery of the O-ring 403. The sealant 401 is in contact with the entirety of the outer surface of the O-ring 403. Since the O-ring 403 is in contact with the O-ring stopper 701, even if external force is applied in a lateral direction, the disposition of the O-ring can be prevented from being misaligned.

In addition, according to the structure of Fig. 4, in an assembly step of the optical module, the sealant can be applied in a stage after vertical pressure is applied to the O-ring (for example, after the O-ring 403 is squeezed with the screws 402).

In addition, similar to the first embodiment or the second embodiment, since the outer surface of the O-ring is covered with the sealant, as described above, water vapor or outgas generated from the sealant can be prevented from entering the housing.

### [Fourth embodiment]

Fig. 5 is a side cross-sectional view of an optical module in the present embodiment. In Fig. 5, the same configurations as in Fig. 1 are denoted by the same reference signs, and descriptions thereof will be omitted. In Fig. 5, it is known that in the MEMS 107 mounted on the optical engine 101 which is accommodated in the housing 202 by the sealing structure, a scanning operation of the MEMS 107 is affected by a change in environment such as temperature, humidity, or pressure in a sealed space of the optical module 200. As a result, in the present embodiment, a measurement element (measurement sensor) 801 that can measure a change in environment affecting operation of the MEMS is accommodated. Then, a single from the measurement sensor 801 is connected via a signal line 601 to a MEMS control circuit 600 that controls operation of the MEMS. In addition, the MEMS control circuit 600 is connected to a control line 602 so as to feedback-control the MEMS 107 according to a change in environment affecting operation of the MEMS.

In such a manner, since the control circuit that feedback-controls the MEMS according to a change in environment affecting operation of the MEMS is provided, even if there is a change in environment affecting operation of the MEMS inside the optical module, the operation of the MEMS can be avoided from being affected.

Here, since the optical module 200 has the sealing structure described in the first to third embodiments, water vapor can be prevented from entering the inner space of the optical module, and a change in amount of water vapor in the inner space of the optical module can be suppressed to the minimum. For this reason, a change in humidity in the inner space of the optical module is reduced, and thus an influence of humidity on the MEMS 107 is negligible. As a result, a change in humidity as an environment affecting operation of the MEMS can be removed, and thus the measurement sensor 801 and the circuit that feedback-controls operation of the MEMS can be simplified.

Incidentally, to be on the safe side, a change in humidity as an environment affecting operation of the MEMS may be added, namely, a change in temperature, pressure, or humidity may be detected and fed back to operation of the MEMS.

In addition, in the present embodiment, when the optical module 200 is assembled, a desiccant 802 is accommodated in the optical module 200 in order to remove water vapor taken into the housing inside 502.

Incidentally, the signal line 601 that transmits a signal from the measurement sensor 801 to the MEMS control circuit 600 and the control line 602 from the MEMS control circuit 600 to the MEMS 107 are required to be wired through the housing 202, and regarding the sealing thereof, unsealing is not required after sealing during production of the optical module, and thus sealing is performed by a fixed sealing method such as resin sealing. The same method applies to the sealing of the exit window 207.

The embodiments have been described above; however, the present invention is not limited to the above embodiments and may include various modification examples. For example, the above embodiments have been described in detail to facilitate understanding the present invention, and the present invention is not necessarily limited to including all of the described configurations. In addition, a part of a configuration of an embodiment can be replaced with a configuration of another embodiment, and a configuration of another embodiment can be added to a configuration of an embodiment. In addition, other configurations can be added to, removed from, or replaced with a part of the configuration of each embodiment.

## Claims

1. An optical module in which an optical component is accommodated in a space formed by a housing and a cap, the optical module comprising:
a seal unit in which an O-ring and a sealant are interposed between the housing and the cap, and
wherein in the seal unit, the sealant is disposed on an outside of the O-ring, an outer surface of the O-ring, the outer surface not being in contact with the housing and the cap, is covered with the sealant without a gap, and a space surrounded by the O-ring, the housing, and the cap is filled with the sealant.

2. The optical module according to claim 1,
wherein the housing includes a step unit on the outside of the O-ring with the sealant interposed between the step unit and the O-ring, and
a space surrounded by the O-ring, the step unit, and the cap is filled with the sealant.

3. The optical module according to claim 1,
wherein in the seal unit, the sealant is interposed between a gap between the O-ring and the housing and a gap between the O-ring and the cap.

4. The optical module according to claim 1,
wherein the housing includes an O-ring stopper on an inside of the O-ring, and
the O-ring is disposed in contact with an outer periphery of the O-ring stopper.

5. The optical module according to claim 4,
wherein the housing is provided with columns for screwing the housing and the cap to each other at equal intervals on the outside of the O-ring with the sealant interposed between the columns and the O-ring.

6. The optical module according to claim 1,
wherein the sealant is a material having a lower water vapor permeability and a smaller elastic modulus than the O-ring.

7. The optical module according to claim 1,
wherein the space accommodates a desiccant, and accommodates a MEMS as the optical component.

8. The optical module according to claim 7,
wherein the space accommodates a measurement element configured to measure a change in environment affecting operation of the MEMS, and information obtained from the measurement element is fed back to a control circuit for the operation of the MEMS.

9. A method for sealing an optical module in which an optical component is accommodated in a space formed by a housing and a cap, the method comprising:
a step of disposing an O-ring on a step unit of the housing, on which the O-ring is to be disposed;
a step of applying a sealant in a liquid state to cover an outer surface of the O-ring without a gap;
a step of fixing the cap to the housing to cause the O-ring to be squeezed; and
a step of solidifying the sealant in a liquid state.

10. The method for sealing an optical module according to claim 9,
wherein in the step of applying the sealant in a liquid state, the sealant in a liquid state is applied to a gap between the O-ring and the step unit, and a portion of the O-ring, the portion being squeezed by the cap.

11. A method for sealing an optical module in which an optical component is accommodated in a space formed by a housing and a cap, the method comprising:
a step of disposing an O-ring in a state where an inner periphery of the O-ring is in contact with an O-ring stopper of the housing;
a step of fixing the cap to the housing to cause the O-ring to be squeezed;
a step of applying a sealant in a liquid state to cover an outer surface of the O-ring without a gap; and
a step of solidifying the sealant in a liquid state.
